# EUROPEAN PATENT APPLICATION

(11) **EP 0 943 502 A1**
(43) Date of publication of application: **22.09.1999**
(21) Application number: 99105393.5
(22) Date of filing: 16.03.1999
(51) Int. Cl.: B60R 21/26

(54) **Airbag inflator**

(30) Priority: 17.03.1998 JP 8514298
(71) Applicant: TAKATA CORPORATION, Shiga 529-1388 (JP)
(72) Inventor: Kokeguchi, Akira c/o Takata Corporation, Shiga 529-1388 (JP)
(74) Representative: VOSSIUS & PARTNER

(57) **Abstract**

To provide an airbag inflator (1) which has two combustion chambers (3,5) for gas-generating agent (14) and in which, after the ignition of gas-generating agent (14) in one combustion chamber, gas-generating agent in the other combustion chamber can be securely ignited in a certain period of time without the use of an electrical signal. The airbag inflator (1) of the present invention comprises two combustion chambers (3,5) for gas-generating agent (14) which are separate with each other and a detonating fuse (21) which extend across the two chambers.

## Description

The present invention relates to an inflator which generates gas for inflating and deploying an air bag for protecting a vehicle occupant. More concretely, the present invention relates to an airbag inflator of a type having a plurality of separate combustion chambers. More particularly, the present invention relates to an airbag inflator which can control the volume of gas to be generated into several modes and can securely and safely combust gas-generating agent in a combustion chamber which was not combusted first.

An airbag inflator having separate combustion chambers containing gas generating agent therein is known from US-A-5,219,178 and JP-A-09-136604. In the airbag inflators disclosed in these publications, the volume of gas to be generated can be controlled into several modes thereby enabling the preferred deployment of the airbag to suitably correspond to the severity of the collision and the condition of the occupant.

The above-described conventional airbag inflators have means of electrically igniting the gas-generating agent in each combustion chamber. However, there is no conventional airbag inflator which employs non-electrical means of transmitting combustion between chambers with some time lag.

It is an object of the present invention to provide an airbag inflator which can ignite gas-generating agent in one chamber after ignition of gas-generating agent in the other chamber securely in a certain time span without necessity of electrical signal. This object is achieved with the features of the claims.

The detonating fuse according to the invention means the whole of non-electrical means of transmitting combustion between the combustion chambers for a gas-generating agent with some time lag.

In the present invention, it is preferable that the detonating fuse can detonate between the plurality of combustion chambers in a time span of from 0.1 to 5 seconds.

When one combustion chamber for gas-generating agent is ignited, the heat causes to ignite one end of the detonating fuse which transmits the fire with a rate corresponding to the characteristics of the detonating fuse. The fire proceeds after a predetermined time to the other end of the detonating fuse and ignites gas-generating agent in the other combustion chamber. The said predetermined time is preferably from 0.1 to 5 seconds, as described above. This time lag prevents the airbag from being influenced by gas generated from gas-generating agent ignited later, during the initial deployment period (about 0.03-0.05 second) in which the control of the deployment is most required. In this way, a gas-generating agent in the other combustion chamber can be combusted securely and completely without the use of electrical signal to ignite gas-generating agent in the other combustion chamber.

The airbag inflator according to an embodiment of the present invention is an inflator which generates gas for the deployment of an air bag, and it is provided with a major combustion chamber for a gas-generating agent (major chamber) and a minor combustion chamber for a gas-generating agent (minor chamber) which are separate with each other, a detonating fuse which extends across the two chambers, and an electrical igniting means for each combustion chambers for a gas-generating agent. In such a way, the combustion mode can be preferably selected from the three modes, that is, both major and minor chamber combustion, major chamber combustion followed by minor chamber combustion, and minor chamber combustion followed by major chamber combustion.

The invention will now be described with reference to the drawings.

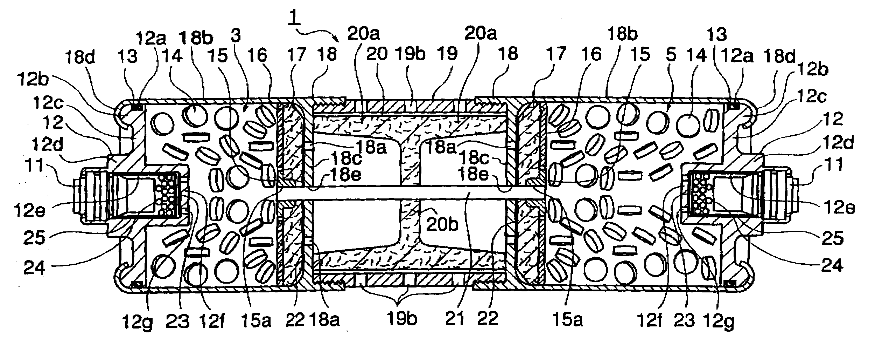

Fig. 1 is a side view in section showing the internal construction of an airbag inflator according to an embodiment of the present invention.

An airbag inflator 1 in this embodiment is a cylinder type inflator having two separate, left side and right side combustion chambers 3, 5 and an intermediate body 19 which connects the two chambers. In this case, the left side combustion chamber 3 has less volume and contains less gas-generating agent than the right side combustion chamber 5.

The left side and the right side combustion chambers 3, 5 have essentially the same construction. The outer peripheries of combustion chambers 3, 5 and side walls of the intermediate body 19 are covered by bodies 18. Each body 18 includes a cylindrical periphery 18b and a side wall 18c extending at the inner, central side of the cylindrical periphery 18b. Each body 18 consists of deep-drawn part or welded structure part of aluminium or steel and in this embodiment, has an outer diameter of 48 mm, a wall thickness at the periphery 18b of 2.5 mm, and a wall thickness at the side wall 18c of 4 mm. The axial lengths of the bodies 18 are about 50 mm for the left side combustion chamber, and about 60 mm for the right side combustion chamber. Each body side wall 18c is provided with orifices 18a which serve as gas outlets, and a detonating fuse hole 18e at the center of the wall. The diameter of each orifice 18a is 2.4 mm, and each side wall has eight of them on a coaxial circle with a radius of 12 mm.

An outer end 18d of each body 18 is finished in such a way that it is folded back toward the inner, and toward the central direction. To the inner side of the outer end 18d is fitted a periphery of a closure (cap) 12.

The closure 12 is a cap enclosing the outer end of each combustion chambers 3, 5. At the periphery of each closure 12, a groove 12a is cut into which a gasket 13 is inserted. At the outer side of the periphery of the closure 12, a ring-shaped protrusion 12b is formed which fits to the inner side of the body outer end 18d.

At the central portion of each closure 12, there are provided a flange 12c and a primer holder 12d. Each primer holder 12d has a cylindrical shape with a bottom and has a recess 12e accommodating a primer (initiator) 11 and a booster propellant 24. Fixed at the outer side of each recess 12e is the primer 11 is fixed. The primer 11 is activated by an electrical signal to project ignition flame in the direction toward the center. The space toward the center of the recess 12e of each primer holder 12d accommodates pellet-like booster propellant (igniting agent) 24 which is ignited by the ignition flame from the primer 11.

Orifices 12g are provided at a bottom wall 12f of each primer recess 12e. On each bottom wall 12f, a seal (e.g. aluminum foil with a thickness of for example 0.1 mm) 23 is applied. When booster propellant 24 is ignited, the increased pressure in the recess 12e breaks seal 23 to allow the combustion flame of booster propellant 24 to blow out through the orifices 12g into the combustion chambers 3 or 5.

Caps 25 are containers to hold booster propellant 24 and consist of deep-formed aluminum part.

The combustion chambers 3, 5 are filled with tablet-like main propellant 14. In this embodiment, the main propellant 14 is a mixture of publicly known tetrazole group explosive and oxidant, the quantities of the mixture being 35g for the left side combustion chamber 3 and 50g for the right side combustion chamber 5.

Within each combustion chamber 3, 5 toward the center, there is provided a propellant damper 16, e.g. consisting of steel wool. The propellant dampers 16 are formed as partitions having the outer diameters which are about the same as the inner diameters of the combustion chambers 3, 5. The propellant dampers 16 serve to shut off the fragments of the seals 23 or of the main propellant. At the inner side of each propellant damper 16, there is provided a cooling filter 17 made of steel wool or the like which serves to decrease the temperature of combustion gas from gas-generating agent. At the central portion of each propellant damper 16 and each cooling filter 17, there is provided a holder 15 to hold the detonating fuse 21 which will be described later. Each holder 15 has a hole 15a into which the end of the detonating fuse 21 is fitted. The end surfaces of the detonating fuse 21 are exposed in the spaces filled with main propellant 14. The holders 15 are made of materials such as Nylon-6.

Between the cooling filters 17 and the body side walls 18c are inserted seals 22 , e.g. consisting of aluminum foil with a thickness of 0.25 mm, the seals serving to lightly cover the orifices 18a. When the inner pressure of the combustion chambers 3, 5 increase caused by the combustion of main propellant therein, seals 22 are broken to allow gas to blow out through the orifices 18a into the interior of the intermediate body 19.

The intermediate body 19 is a cylinder made of aluminum or steel and serves as a member to connect the left side and the right side combustion chambers 3, 5. In the embodiment, the combustion chambers 3, 5 and the intermediate body 19 are connected by means of threads. The intermediate body 19 is provided with a number of orifices 19b for blowing out gas. In this embodiment, the diameter of each orifice 19b is 3.2 mm and there are provided 16 of the orifices. Such an arrangement of the intermediate body 19 between the left side and the right side combustion chambers for gas-generating agent 3, 5 has an advantage that a filter member can be simplified and decreased in weight. In addition, the blowing residual such as combustion residual of propellant or aluminum foil fragments can be restrained to go out of the inflator 1, because the gas flow is inflected in its direction by an angle of 90 degrees within the intermediate body 19 before going out of the inflator 1.

Arranged within the intermediate body 19 is a main filter 20, e.g. consisting of steel wool. The main filter 20 comprises a cylindrical portion 20a which is arranged along the inner periphery of the intermediate body and a partition portion 20b which extend radially in the shape of a disc at the center in the longitudinal direction. The cylindrical part 20a serves to remove solid materials from gas blowing out through orifices 19b of the intermediate body 19 and at the same time to cool down the gas. The partition portion 20b serves to protect the secondly combusted combustion chamber against the high temperature gas from the firstly combusted combustion chamber, thus preventing the former from untimely ignition.

Arranged at the central part of the intermediate body 19 is a detonating fuse 21 which extend along the longitudinal direction. The both ends of the detonating fuse 21 are guided through each hole 18e at each body side wall into the interior of each combustion chambers 3, 5. The detonating fuse 21 is a train of powder which has a role of transmitting the combustion from one combustion chamber to the other combustion chamber in a predetermined time.

In this embodiment, the detonating fuse 21 is a cable-like material with an outer diameter of 0.189 inch (4.8 mm) and a length of 67 mm. It consists of a cylinder made of polypropylene or glass fiber containing detonating powder including NH₄ClO₄ and KClO₄ which is applied onto the periphery of a core line made of glass fiber. The time to transmit detonation can be controlled by controlling the quality and quantity of the detonating powder. For example, in order to transmit for the length of 67 mm in 0.1 second, a powder containing NH₄ClO₄ 70% and KClO₄ 30% is applied in a quantity of 0.15 g/m. In order to transmit for the same length in 5 seconds; a powder containing NH₄ClO₄ 40% and KClO₄ 60% is applied in a quantity of 0.05 g/m.

In the airbag inflator of the present embodiment, when the bag is to be deployed with ordinary power, the electrical signal is sent to both combustion chambers, causing almost simultaneous ignition and gas generation. When the bag is to be deployed with a decreased power, one combustion chamber is ignited to exhaust gas, and then the combustion is transmitted to the other combustion chamber via the detonating fuse to ignite it. Three modes of deployment in total can be selected by selecting which one of the left and the right combustion chambers 3,5 containing different quantities of propellant should be ignited first.

Thus, using the airbag inflator according to the present embodiment, the ignition of the gas-generating agent in one combustion chamber causes the ignition of one end of the detonating fuse which transmits the fire to the other end of the detonating fuse with a rate corresponding to the characteristics of the detonating fuse, causing the gas-generating agent in the other combustion chamber to be ignited after a predetermined time. Accordingly, gas-generating agent in the other combustion chamber can be combusted securely and completely without an electrical signal to ignite it, while fully controlling the deployment of air bag in the initial deployment period in which the deployment is most required to be controlled.

As is clear from the description in the above, according to an embodiment of the present invention, an airbag inflator is provided in which after the ignition of one portion of explosive, the other portion of explosive can be securely ignited in a certain period of time without the use of the electrical signal.

On the other hand, in the embodiment in which the direction of the deployment gas flow is inflected within the intermediate body before blowing out to the exterior, an effect is obtained that the blowing residual going out of the inflator is decreased.

## Claims

1. An airbag inflator for generating gas for the deployment of an air bag, and comprising:
a plurality of combustion chambers for a gas-generating agent, which are separate from each other; and
a detonating fuse extending across the said plurality of combustion chambers.

2. An airbag inflator for generating gas for the deployment of an air bag, and comprising:
a major combustion chamber for gas-generating agent (major chamber) and a minor combustion chamber for gas-generating agent (minor chamber) which are separate from each other;
a detonating fuse extending across the said two chambers; and
electrical igniting means provided for sad combustion chambers, respectively.

3. The airbag inflator as claimed in claim 2, wherein the combustion mode can be selected from 3 modes consisting of both major and minor chamber combustion, major chamber combustion followed by minor chamber combustion, and minor chamber combustion followed by major chamber combustion.

4. The airbag inflator as claimed in claim 1, 2 or 3, wherein said detonating fuse transmits detonation between the plurality of combustion chambers in a time span of from 0.1 to 5 seconds.

5. The airbag inflator as claimed in any one of claims 1 through 4, wherein the two combustion chambers for gas-generating agent are connected by an intermediate body located therebetween and deployment gas from the combustion chambers blows out to the exterior through the intermediate body.

6. The airbag inflator as claimed in claim 5, wherein means for obstruction of heat transmission between the two chambers are provided within said intermediate body.

7. An airbag inflator for generating gas for the deployment of an air bag,
characterized by comprising two combustion chambers for gas-generating agent connected by an intermediate body located therebetween, wherein the deployment gas from the combustion chambers enters into the intermediate body and is inflected its direction within the intermediate body to blow out to the exterior.
